(19) Europäisches Patentamt
European Patent Office
Office européen des brevets

(11) **EP 4 047 507 B1**

(12) **EUROPÄISCHE PATENTSCHRIFT**

(45) Veröffentlichungstag und Bekanntmachung des Hinweises auf die Patenterteilung:
**30.11.2022  Patentblatt 2022/48**

(21) Anmeldenummer: **21157810.9**

(22) Anmeldetag: **18.02.2021**

(51) Internationale Patentklassifikation (IPC):
**G06K 7/10** *(2006.01)*

(52) Gemeinsame Patentklassifikation (CPC):
**G06K 7/10603; G06K 7/10851**

(54) **ERFASSEN EINES OPTISCHEN CODES**

OPTICAL CODE DETECTION

DÉTECTION D'UN CODE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.08.2022  Patentblatt 2022/34**

(73) Patentinhaber: **SICK AG**
**79183 Waldkirch (DE)**

(72) Erfinder:
• **Müller, Romain**
 **79252 Stegen (DE)**
• **Hoegy, Martin**
 **79271 St. Peter (DE)**

(56) Entgegenhaltungen:
**WO-A1-90/13875    US-A- 5 115 121**
**US-A- 5 371 361**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Codescanvorrichtung und ein Verfahren zum Erfassen eines optischen Codes auf einem Objekt in einem Lesebereich nach dem Oberbegriff von Anspruch 1 beziehungsweise 13.

Obwohl optische Codes längst auch mit Kameras gelesen werden können, sind Codescanner, die einen Barcode oder Strichcode mit einem Laserlesestrahl quer zum Code abtasten, weiterhin in vielfältiger Form im Einsatz. Ein Aufbauprinzip verwendet einen Drehspiegel mit mehreren Spiegelfacetten, so dass ein begrenzter Winkelabschnitt über einen Öffnungswinkel hinweg mehrfach je Umdrehung entsprechend der Anzahl der Spiegelfacetten erfasst wird. Der Drehspiegel wird dann auch als Polygonspiegelrad oder kurz Polygonrad bezeichnet.

Typische Anwendungsgebiete von Codelesern sind Supermarktkassen, die automatische Paketidentifikation, Sortierung von Postsendungen, die Gepäckabfertigung in Flughäfen und andere Anwendungen in der Logistik oder Fabrikautomation. In vielen Fällen werden die Code tragenden Objekte, wie beispielsweise Bauteile, Pakete oder Koffer durch das Lesefeld des stationär montierten Codelesers bewegt. Die Objekte werden für eine korrekte Sortierung oder ähnliche Bearbeitungsschritte anhand der angebrachten Codes identifiziert.

Der Drehspiegel eines Codescanners rotiert herkömmlich mit einer fixen und konstanten Scanfrequenz. Das führt jedoch dazu, dass die Hell-Dunkelübergänge in dem Empfangssignal je nach Erfassungssituation für einen an sich gleichen Code erheblich unterschiedlich ausfallen. Im Stand der Technik wird dieser Aspekt bisher nicht beachtet.

Die EP 2 026 249 B1 offenbart einen kamerabasierten Codeleser, der entzerrte Bilder bewegter Objekte mit gleichmäßiger Auflösung durch einen Zeilensensor aufnimmt. Der Zeilensensor erfasst die Objekte sukzessive und zeilenweise während der Bewegung und setzt anschließend die Bildzeilen zu einem Gesamtbild zusammen. Um hier in Bewegungsrichtung zu einer gleichmäßigen Auflösung zu kommen, wird die Aufnahmefrequenz des Zeilensensors in Abhängigkeit von der Geometrie der erfassten Objekte angepasst. Das hat keinerlei Bezug zu einer Scanfrequenz eines Codescanners, bei dem bestenfalls davon gesprochen werden kann, dass er eine einzige Bildzeile erfasst, die dann auch einzeln ausgewertet und nicht aneinandergereiht werden. Die Aufnahmefrequenz der EP 2 026 249 B1 dagegen bezieht sich auf eine Auflösung quer zu dieser Bildzeile, nämlich in Bewegungsrichtung, während die Auflösung der jeweiligen Bildzeile selbst durch die Pixelordnung der Zeilenkamera unverrückbar festgelegt ist. Eine Scanfrequenz einer periodischen Abtastung mit einem Lesestrahl ist in einer Kamera nicht vorgesehen, die Pixel werden gleichzeitig belichtet.

In der DE 10 2018 105 301 A1 wird eine Kamera vorgestellt, die einen integrierten Abstandssensor aufweist. Dessen Abstandsmessung wird für eine Vielzahl von Einrichtschritten und sonstigen Verbesserungen benutzt. Es wurde aber schon darauf hingewiesen, dass es eine Scanfrequenz der Abtastung mit einem Lesestrahl in einer Kamera gar nicht gibt.

Aus der US 5 504 316 ist ein Laserscansystem für das Lesen von 1D- und 2D-Barcodes bekannt. In einer ersten Abtastung wird festgestellt, wie der Code orientiert ist, und anschließend wird mit einem daran angepassten Scanmuster der Code gelesen. Das löst das Problem, dass sich ein Code nur lesen lässt, wenn dessen Leselinie sämtliche Codeelemente quert, verbessert aber nicht die Hell-Dunkelübergänge für das eigentliche Auswerten des Empfangssignals.

Die US 5 371 361 A offenbart einen Barcodescanner, dessen opto-mechanisches System dafür ausgebildet ist, mindestens einen Parameter über das Scanvolumen ungefähr konstant zu halten. In einer Ausführungsform ist dieser Parameter die Lichtfleckgeschwindigkeit auf dem Ziel. Sie wird konstant gehalten, indem der Abstand des Zieles über eine Fokuseinheit bestimmt und anhand dieses Abstandswerts die Drehgeschwindigkeit des Scanmotors angepasst wird.

Die US 5 115 121 A zeigt einen Barcodeleser mit einem in Amplitude und Frequenz variablen Scanbereich. Dabei korrespondiert die Amplitude mit der lateralen Ausdehnung des Scanbereichs und die Frequenz mit der Abtastgeschwindigkeit. Konkret wird in einer Art Sinusburst mit zunehmender Amplitude zunächst ein kleiner und dann immer größerer Scanbereich abgetastet. Die Frequenz bleibt dabei je nach Ausführungsform konstant, was sich wegen des größer werdenden Scanbereichs in einer schnelleren Abtastung äußert, oder die Frequenz wird zur Verhinderung dieses Effekts kontinuierlich abgesenkt. Auf diese Weise werden Codes in beliebigem Abstand gelesen, ohne diesen Abstand zu kennen.

In der WO 90/13875 A1 wird ein Barcode mehrfach bei unterschiedlichen Scangeschwindigkeit gescannt.

Es ist daher Aufgabe der Erfindung, das Lesen von Codes mit einem Codescanner zu verbessern.

Diese Aufgabe wird durch eine Codescanvorrichtung und ein Verfahren zum Erfassen eines optischen Codes auf einem Objekt in einem Lesebereich nach Anspruch 1 beziehungsweise 13 gelöst. Ein Lichtsender erzeugt den Lesestrahl, vorzugsweise unter Zuhilfenahme einer strahlformenden Optik. Eine Ablenkeinheit lenkt den Lesestrahl periodisch ab und tastet so den Lesebereich mit einer Scanfrequenz $f_{scan}$ ab. Ein Lichtempfänger, wiederum vorzugsweise mit Empfangsoptik, erzeugt aus dem zurückkehrenden Lesestrahl ein Empfangssignal. Hat der zurückkehrende Lesestrahl einen optischen Code überstrichen, so enthält das Empfangssignal dem Code entsprechende Hell-Dunkel-Wechsel. Eine Steuer- und Auswertungseinheit liest den Codeinhalt des optischen Codes aus dem Empfangssignal mit einem oder mehreren an sich bekannten Decodierverfahren aus. Die Codescanvorrichtung umfasst zusätzlich einen Abstandssensor, um einen Abstand d von der Codescanvorrichtung zu dem Objekt beziehungsweise dem optischen Code zu bestimmen.

Die Erfindung geht von dem Grundgedanken aus, dass die Scanfrequenz $f_{scan}$ Auswirkungen auf die Modulgröße des optischen Codes hat, die noch ausreichend aufgelöst werden kann, um den optischen Code zu lesen. Deshalb wird die Scanfrequenz $f_{scan}$ in Abhängigkeit von dem Abstand d eingestellt, und zwar bevorzugt dynamisch im Betrieb bis hin zu neu für jeden zu lesenden Code anhand des dafür jeweils gemessenen Abstands d. Denn mit dem Abstand d des zu lesenden Codes nimmt die Geschwindigkeit zu, mit dem sich der von dem Lesestrahl auf dem Code erzeugte Lichtfleck bewegt. Es ist daher vorteilhaft, Objekte beziehungsweise Codes, die sich weiter weg befinden, langsamer abzutasten als solche nahe an der Codescanvorrichtung. Vorzugsweise wird die Scanfrequenz $f_{scan}$ umgekehrt proportional zum Abstand d angepasst, da die genannte Geschwindigkeit des Lichtflecks mit dem Abstand d linear zunimmt. Wie schon einleitend zur EP 2 026 249 B1 diskutiert, darf die Scanfrequenz $f_{scan}$ eines Codescanners nicht mit der Framerate oder Aufnahmefrequenz einer Zeilenkamera verwechselt werden, eine Zeilenkamera hat keine Scanfrequenz.

Die Erfindung hat den Vorteil, dass sich die Erfolgsrate des Lesens von optischen Codes für die Codescanvorrichtung verbessert. Bei einem fernen Code wird die ansonsten zu hoch werdende Geschwindigkeit des scannenden Lichtflecks reduziert, und die Hell-Dunkel-Übergänge werden besser erfasst. Für nahe Codes können in derselben Erfassungszeit mehr Lesewiederholungen erfolgen. Eine herkömmliche, feste Scanfrequenz muss sich hier entweder an dem schlechtesten Fall eines Codes am fernen Ende der Lesereichweite ausrichten, oder es müsste in Kauf genommen werden, dass solche Codes bisweilen nicht mehr lesbar sind. Erfindungsgemäß kann für alle Abstände dynamisch ein optimaler Arbeitspunkt der Scanfrequenz $f_{scan}$ gefunden werden.

In der Steuer- und Auswertungseinheit ist eine Kennlinie für den Zusammenhang der einzustellenden Scanfrequenz $f_{scan}$ in Abhängigkeit von dem Abstand d gespeichert. Die Steuer- und Auswertungseinheit umfasst dafür einen entsprechenden Speieher oder hat Zugriff auf einen Speicher. Dabei soll mit Kennlinie lediglich der Zusammenhang zwischen den beiden Größen begrifflich gefasst werden, ebenso könnte von einem Verlauf oder einer Funktion gesprochen werden, die auch diskret und insbesondere als Tabelle (LUT, Lookup Table) gespeichert sein kann.

Die Steuer- und Auswertungseinheit ist bevorzugt dafür ausgebildet, die Scanfrequenz $f_{scan}$ in Abhängigkeit einer Modulgröße m des optischen Codes einzustellen. Ein Modul ist das kleinste Element des Codes, und die Codeelemente oder Zeichen sind aus einem oder mehreren Modulen zusammengesetzt. Somit hat ein Strich bei einem Barcode eine Breite, die dem Ein- oder einem Vielfachen eines Moduls entspricht. Die Modulgröße ist ein Maß für die Ausdehnung des Moduls, und folglich wird das Decodieren umso herausfordernder, je kleiner die Modulgröße wird. Daher ist es vorteilhaft, die Scanfrequenz $f_{scan}$ auch in Abhängigkeit von der Modulgröße m anzupassen. Wegen der bereits vorgesehenen Abhängigkeit der Scanfrequenz $f_{scan}$ vom Abstand d ergibt sich nun insgesamt eine Abhängigkeit von den beiden Größen Abstand und Modulgröße (d, m).

In der Steuer- und Auswertungseinheit ist bevorzugt mindestens eine Kennlinie für den Zusammenhang der einzustellenden Scanfrequenz $f_{scan}$ in Abhängigkeit von dem Abstand d und der Modulgröße m gespeichert. Mit dem weiteren Parameter Modulgröße m genügt eine einfache Kennlinie zur Beschreibung nicht mehr, außer die Codescanvorrichtung wird fest nur für eine bestimmte Modulgröße m ausgelegt. Vielmehr stehen die Kennlinien nun für die Abhängigkeit $f_{scan}(d,m)$. Dabei ist denkbar, dass ein Kennlinienfeld nur aus Kennlinien für eine gewisse Auswahl von Modulgrößen m bekannt ist. Für Zwischenwerte der Modulgröße ist dann eine passende Kennlinie auszuwählen, oder es kann interpoliert werden.

Die Kennlinie ist bevorzugt aus einer Ortsfrequenz $f_0$ der Hell-Dunkel-Übergänge im Empfangssignal in Abhängigkeit von dem Abstand d und der Scanfrequenz $f_{scan}$ bestimmt, anhand derer Paare von Scanfrequenz $f_{scan}$ und Abstand d identifiziert sind, in denen eine gewünschte Ortsfrequenz erreicht ist. Die zu der Ortsfrequenz $f_0$ gehörige Periode ist der kürzeste im Empfangssignal noch erfasste Abstand zwischen Hell und Dunkel. Um nun die Kennlinie oder das Kennlinienfeld zu bestimmen, wird zunächst die Abhängigkeit der Ortsfrequenz $f_0$ von dem Abstand d und der Scanfrequenz $f_{scan}$ beispielsweise in einer Tabelle oder jeglicher sonst denkbaren Repräsentation untersucht. Dann wird eine gewünschte Ortsfrequenz vorgegeben, die erreicht werden soll, und in der nun bekannten Abhängigkeit $f_0(d, f_{scan})$ werden Paare oder Stützpunkte $(d, f_{scan})$ gesucht, in denen diese gewünschte Ortsfrequenz im Rahmen vorgebbarer Toleranzen realisiert ist. Jeder Stützpunkt liefert einen Punkt einer Kennlinie, die somit in beliebiger Genauigkeit ausgetastet werden kann. Als Kennlinie gespeichert werden können die Stützpunkte selbst, vorzugsweise geordnet als Tabelle oder diskrete Funktion, oder eine daraus gewonnene Kennlinie, etwa durch Interpolation oder Funktionsfit. Es können weitere Kennlinien für andere Modulgrößen m ganz entsprechend gewonnen werden, wobei dann jeweils eine Ortsfrequenz $f_0$ entsprechend dieser Modulgröße m betrachtet wird.

Die Abhängigkeit der Ortsfrequenz $f_0$ von dem Abstand d und der Scanfrequenz $f_{scan}$ ist bevorzugt anhand der Formel $f_0 = \frac{2\pi d}{Nm} f_{scan}$ bestimmt. Dabei bezeichnet N die Anzahl Spiegelflächen der Ablenkeinheit, um auch ein Polygonspiegelrad mit mehreren Facetten berücksichtigen zu können. Es kann sich aber auch um einen einfachen Spiegel mit N=1 handeln. Die übrigen Größen wurden bereits vorgestellt. Der Abstand d kann noch einen internen Laufzeitanteil enthalten, der hier vernachlässigt beziehungsweise schon in der Abstandsmessung berücksichtigt ist. Weiterhin ist in der Formel eine durch die zweifache Modulgröße 2m vorgegebene Ortsfrequenz $f_0$ verwendet. Hier wären auch andere Faktoren denkbar, um sicherzustellen, dass ein Modul der Modulgröße m noch erfasst wird, aber das spielt jedenfalls solange keine Rolle, wie auch die gewünschte Ortsfrequenz entsprechend bewertet wird. Damit wird aber klar, dass die Abhängigkeit der Ortsfrequenz nur vorzugsweise genau nach der obigen Formel berechnet und im Allgemeinen nur anhand dieser Formel bestimmt wird, wobei insbesondere konstante Faktoren wie der besagte Faktor 2 verändert werden.

Die gewünschte Ortsfrequenz ist bevorzugt anhand der Auslegung der Codescanvorrichtung und/oder der Signalauswertung vorgegeben, insbesondere anhand mindestens eines Filters und/oder Decodierverfahrens. Es gibt nicht die eine global beste Ortsfrequenz, das hängt von der konkreten Ausgestaltung der Codescanvorrichtung ab, etwa den eingesetzten analogen Filtern oder der Anzahl Facetten eines Polygonspiegelrads der Ablenkeinheit, und auch von den verwendeten Decodierverfahren und darin möglicherweise eingesetzten Signalaufbereitungsverfahren. Letztlich ist das Kriterium, dass Codes gelesen werden können, womit auch Datenanalyse einer Vielzahl von Lesevorgängen eine geeignete gewünschte Ortsfrequenz ergeben kann.

Die Ablenkeinheit weist bevorzugt ein Polygonspiegelrad mit N Spiegelflächen oder Spiegelfacetten auf. Dadurch wird mit einer Umdrehung der Ablenkeinheit das Lesefeld N-Fach überstrichen. Anders als bei einem messenden Laserscanner genügt für eine Codescanvorrichtung ein begrenzter Winkelausschnitt als Sichtfeld, und dann kann durch ein Polygonspiegelrad die effektive Scanfrequenz bei gleicher physischer Drehzahl recht einfach erhöht werden.

Die Codescanvorrichtung ist bevorzugt für das Lesen von optischen Codes einer bestimmten Modulgröße m ausgebildet. Sie hat also eine feste Erwartung der Modulgröße m und ist dafür ausgelegt beziehungsweise optimiert. Die Modulgröße m wird bevorzugt konfiguriert, beispielsweise in einem anfänglichen Einrichtvorgang. Denkbar ist aber auch, dass die Codescanvorrichtung automatisch eine geeignete Modulgröße m einstellt, beispielsweise auf eine Modulgröße m, die in einer Historie von Lesevorgängen besonders häufig vorkommt, oder eine selbst geschätzte Modulgröße. In der Regel ist für eine längere Betriebsphase die Modulgröße m statisch. Die Anpassung der Scanfrequenz $f_{scan}$ bleibt dynamisch, wobei sich das auf den variablen Abstand d bei fester Modulgröße m bezieht und die geeignete Scanfrequenz $f_{scan}$ insbesondere aus einer Kennlinie $f_{scan}(d, m)$ für das gewählte feste m gelesen wird.

Der Abstandssensor ist bevorzugt in die Codescanvorrichtung integriert. Das ergibt einen besonders kompakten Aufbau mit einfachem internem Datenzugriff und deutlich vereinfachter Montage. Außerdem ist damit die gegenseitige Ausrichtung von Abstandssensor und Codescanvorrichtung bekannt und festgelegt. Die Codescanvorrichtung mit ihrem fest verbauten eigenen Abstandssensor kann autark ihre Umgebung wahrnehmen.

Der Abstandssensor ist bevorzugt ein optoelektronischer Abstandssensor insbesondere nach dem Prinzip des Lichtlaufzeitverfahrens. Das ist ein besonders geeignetes Verfahren im Zusammenhang mit der ebenfalls optischen Erfassung der größeren Vorrichtung. Der Abstandssensor weist bevorzugt eine Vielzahl von im Geiger-Modus betreibbaren Lawinenphotodioden auf. Derartige Lawinenphotodiodenelemente können besonders einfach dadurch aktiviert und deaktiviert werden, dass eine Vorspannung über oder unter der Durchbruchspannung angelegt wird. So können aktive Zonen oder interessierende Bereiche der Abstandsmessung festgelegt werden.

Der Abstandssensor weist bevorzugt mehrere Messzonen zur Messung von mehreren Abstandswerten auf. Eine Messzone weist vorzugsweise ein oder mehrere Lichtempfangselemente auf. Jede Messzone ist in der Lage, einen Abstandswert zu messen, so dass der Abstandssensor eine laterale Ortsauflösung gewinnt und ein ganzes Höhenprofil bestimmen kann. Aus den mehreren Abstandswerten kann ein gemeinsamer Abstandswert als Abstand d gebildet werden. Der gemeinsame Abstandswert soll repräsentativ sein, und dazu eignet sich beispielsweise ein statistisches Maß wie der Mittelwert. Dem gemeinsamen Abstandswert können lediglich bestimmte Abstandswerte aus einer relevanten Region der Abstandsmessung zugrunde gelegt werden. Bei einer Förderbandanwendung könnten das diejenigen Messzonen sein, die auf das jeweils kommende Objekt gerichtet sind, um möglichst frühzeitig Abstandswerte zu gewinnen. Bei einer manuellen Präsentation von Objekten in dem Lesebereich werden vorzugsweise eher Messzonen im Zentrum verwendet. Für einen Abstandssensor, der nur eine Messzone besitzt, ist der einzige Abstandswert automatisch der gemeinsame Abstandswert.

Die Codescanvorrichtung ist bevorzugt stationär an einer Fördereinrichtung montiert, welche Objekte in Bewegungsrichtung fördert. Dies ist eine sehr häufige Anwendungssituation. Die örtlichen und zeitlichen Beziehungen zwischen einer Abstandsmessung in einer Förderposition und Bildaufnahme in einer späteren Förderposition sind sehr einfach und berechenbar. Dazu muss lediglich die Fördergeschwindigkeit parametriert, von einer übergeordneten Steuerung übergeben oder, etwa anhand einer Verfolgung eines Höhenprofils, selbst gemessen werden.

Der Abstandssensor ist bevorzugt derart angeordnet und/oder ausgerichtet, dass der Abstand d bereits vor dem Abtasten des optischen Codes mit dem Lesestrahl bekannt ist. Der Abstandssensor erfasst gleichsam die Zukunft. Dafür ist der Abstandssensor vorzugsweise bezüglich der Bewegungsrichtung vorgelagert angeordnet und/oder entsprechend mit Sichtrichtung entgegen der Bewegungsrichtung ausgerichtet. Auf diese Weise ist der Abstand d immer schon im Voraus bekannt, und für das eigentliche Codescannen kann die neue Scanfrequenz $f_{scan}$ rechtzeitig eingestellt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Darstellung einer Codescanvorrichtung;

Fig. 2    eine Ansicht einer beispielhaften Anwendung einer Codescanvorrichtung in stationärer Montage an einem Förderband;

Fig. 3    eine dreidimensionale Detailansicht der Montage einer Codescanvorrichtung oberhalb von durch deren Lesefeld geförderten Objekten;

Fig. 4    eine Skizze zur Veranschaulichung der Beziehung zwischen einer Modulgröße m, einem jeweils in einer Zeiteinheit abgescannten Bereich x, einer Ortsfrequenz $f_0$ im Empfangssignal und einer Scanfrequenz $f_{scan}$;

Fig. 5    eine beispielhafte Tabelle der Abhängigkeit der Ortsfrequenz $f_0$ von der Scanfrequenz $f_{scan}$ und einem Abstand zum Code (hier TA genannt); und

Fig. 6    beispielhafte Kennlinien für die Abhängigkeit der Scanfrequenz $f_{scan}$ vom Leseabstand d für verschiedene Modulgrößen m, die beispielsweise aus Tabellen entsprechend Figur 5 abgeleitet sind.

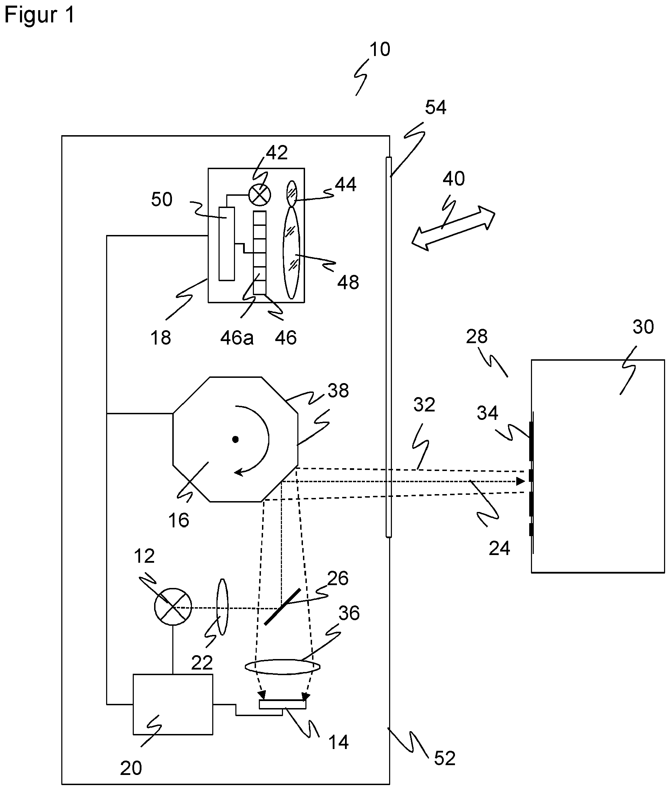

Figur 1 zeigt eine schematische Darstellung einer Codescanvorrichtung 10. In grobem Aufbau lässt sich die Codescanvorrichtung in drei Funktionsgruppen aufteilen, nämlich eine unten dargestellte Sende-Empfangseinheit mit einem Lichtsender 12 und einem Lichtempfänger 14, eine Ablenkeinheit 16 in der Mitte und einen Abstandssensor 18 oben. Hinzu kommen Elektronikgruppen, von denen nur eine mit allen bisher genannten Funktionsgruppen verbundene Steuer- und Auswertungseinheit 20 gezeigt ist, weitere nicht dargestellte Elektronikgruppen sind für Aufgaben wie Versorgung oder Kommunikation zuständig.

Der Lichtsender 12, beispielsweise eine Laserdiode oder eine LED, erzeugt mit Hilfe einer Sendeoptik 22 ein als Lesestrahl 24 bezeichnetes Lichtbündel. Der Lesestrahl 24 wird ein erstes Mal an einem Strahlteiler 26 und dann erneut an der Ablenkeinheit 16 entsprechend deren Winkelstellung umgelenkt und tritt dann aus der Codescanvorrichtung 10 in einen Lesebereich 28 aus.

Trifft der Lesestrahl 24 auf ein Objekt 30, so wird ein Teil des Lichts als zurückkehrender Lesestrahl 32 zu der Codescanvorrichtung 10 reflektiert. Der für eine Codescanvorrichtung 10 interessante Fall ist, dass die Reflexion an einem optischen Code 34 erfolgt. Dabei wird hier sprachlich nicht zwischen Reflexion und der wesentlich häufiger auftretenden diffusen Remission unterschieden. Der rückkehrende Lesestrahl 24 wird an der Ablenkeinheit 16 umgelenkt, und ein den Strahlteiler 26 transmittierender Anteil wird über eine Empfangsoptik 36 auf den Lichtempfänger 14 geleitet. Der beispielsweise als Photodiode, Lawinenphotodiode (APD, Avalanche Photodiode) oder Mehrfachanordnung davon ausgebildete Lichtempfänger erzeugt aus dem einfallenden zurückkehrenden Lesestrahl 32 ein Empfangssignal. Wie bereits im Falle der Sendeoptik 22 ist auch die Empfangsoptik 36 nur schematisch als einfache Linse dargestellt, ohne damit jegliche an sich für Codescanner bekannte Formen einer strahlformenden Optik auszuschließen.

Die Ablenkeinheit 16 ist in Figur 1 ein Polygonspiegelrad mit N Spiegelflächen oder Spiegelfacetten 38. Alternativ wäre auch ein einfacher rotierender Spiegel vorstellbar. Die Anzahl N der Spiegelfacetten 38, hier rein beispielhaft N=8, korrespondiert mit dem erfassten Winkelbereich des Lesebereichs 28, der umso größer wird, je weniger Spiegelfacetten 38 vorgesehen sind. Die Ablenkeinheit 16 wird durch einen nicht dargestellten Antrieb in Rotation mit einer Scanfrequenz $f_{scan}$ versetzt, d.h. sie rotiert $f_{scan}$ mal je Sekunde. Der Lesebereich 28 wird dabei wegen der mehreren Spiegelfacetten 38 effektiv mit einer Frequenz $N\,f_{scan}$ abgetastet.

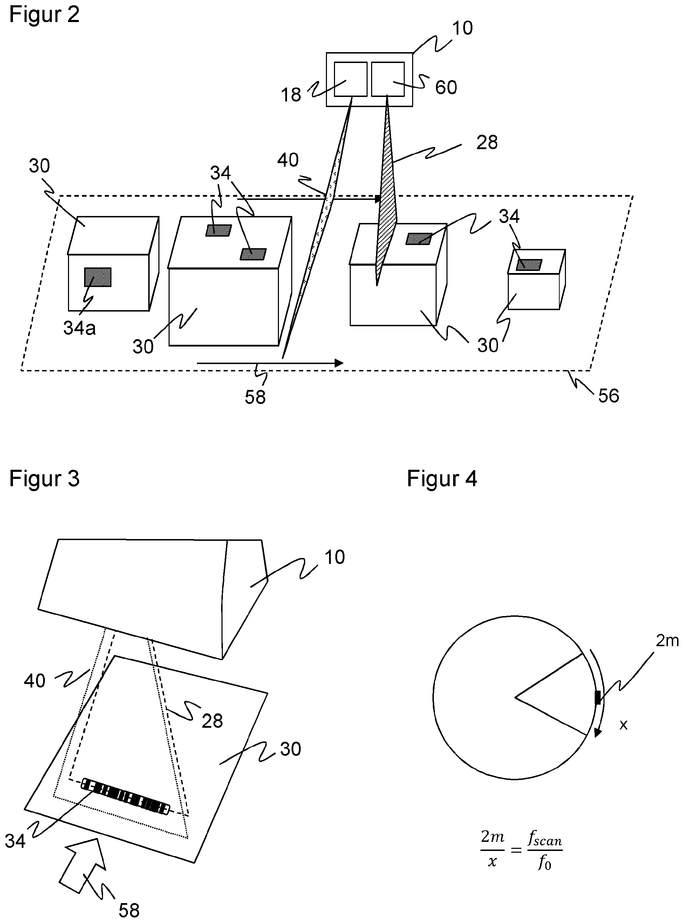

Der Abstandssensor 18 misst zusätzlich zu der Erfassung von optischen Codes 34 einen Abstand d zu einem Objekt 30. Vorzugsweise basiert das ebenfalls auf einem optischen Verfahren, insbesondere einem Lichtlaufzeitverfahren (TOF, Time of Flight). Andere, auch nicht optische Messverfahren sind jedoch ebenfalls vorstellbar. Die für eine Abstandsmessung ausgesandten und wieder empfangenen Abstandsmess-Lichtsignale 40 treffen vorzugsweise nicht denselben Ort wie der Lesestrahl 24, sondern haben dazu einen Versatz durch entsprechende Anordnung und/oder Ausrichtung des Abstandssensors 18, was in Figur 1 durch Schrägstellen und Beabstanden des Pfeils zu den Abstandsmess-Lichtsignalen 40 möglicherweise auch übertrieben dargestellt ist. Das hat Vorteile in einer stationären Montage an einem Förderband, um den Abstand d bereits vorab messen zu können, wie später unter Bezugnahme auf die Figuren 2 und 3 näher erläutert. Alternativ ist aber auch denkbar, dass der Abstandssensor 18 zumindest im Wesentlichen denselben Sichtbereich hat wie der Lichtempfänger 14 und somit den Abstand d des optischen Codes 34 misst, wenn dieser sich bereits in seiner Leseposition befindet.

Der Abstandssensor 18 umfasst in seiner bevorzugten Ausführungsform als TOF-Sensor einen TOF-Lichtsender 42 mit TOF-Sendeoptik 44 sowie einen TOF-Lichtempfänger 46 mit TOF-Empfangsoptik 48. Damit wird das Abstandsmess-Lichtsignal 40 ausgesandt und wieder empfangen. Eine Lichtlaufzeitmesseinheit 50 bestimmt die Laufzeit des Abstandsmess-Lichtsignals 40 und daraus den Abstand d zu demjenigen Objekt 30, an dem das Abstandsmess-Lichtsignal 40 zurückgeworfen wurde. Der TOF-Lichtempfänger 46 kann mehrere Lichtempfangselemente 46a aufweisen, die dann einzeln oder in kleineren Gruppen Messzonen bilden, mit denen jeweils ein Einzelabstandswert bestimmt wird. Damit wird dann ein Höhenprofil erfasst, aus dem aber wiederum durch Verrechnen oder Auswahl bestimmter Lichtempfangselemente 46a ein einziger Wert für den Abstand d erzeugt werden kann.

Der Aufbau des Abstandssensors 18 ist rein beispielhaft. Die optoelektronische Entfernungsmessung mittels Lichtlaufzeitverfahren ist bekannt und wird daher nicht im Einzelnen erläutert. Zwei beispielhafte Messverfahren sind Photomischdetektion mit einem periodisch modulierten Abstandsmess-Lichtsignal 40 und Pulslaufzeitmessung mit einem pulsmodulierten Abstandsmess-Lichtsignal 40. Dabei gibt es auch hochintegrierte Lösungen, in denen der TOF-Lichtempfänger 46 mit der Lichtlaufzeitmesseinheit 50 oder zumindest Teilen davon, etwa TDCs (Time-to-Digital-Converter) für Laufzeitmessungen, auf einem gemeinsamen Chip untergebracht ist. Dazu eignet sich insbesondere ein TOF-Lichtempfänger 46, der als Matrix von SPAD-Lichtempfangselementen 46a aufgebaut ist (Single-Photon Avalanche Diode). Messzonen aus SPAD-Lichtempfangselementen 46a können gezielt deaktiviert und aktiviert werden, indem die Vorspannung unter oder über die Durchbruchspannung eingestellt wird. Dadurch kann ein aktiver Bereich des Abstandssensors 18 eingestellt werden. Die TOF-Optiken 44, 48 sind nur symbolhaft als jeweilige Einzellinsen stellvertretend für beliebige Optiken wie beispielsweise ein Mikrolinsenfeld gezeigt.

Die Steuer- und Auswertungseinheit 20 ist als ein einziger separater Baustein gezeigt. Sie kann jedoch auch mehrere Bausteine umfassen, etwa mindestens einen Mikroprozessor, mindestens ein FPGA (Field Programmable Gate Array) und/oder mindestens ein ASIC (Application-Specific Integrated Circuit). Diese digitalen Rechenbausteine sind vorzugsweise zumindest teilweise echtzeitfähig, um verschiedene Einstellungen vorzunehmen, etwa eine nicht gezeigte Autofokuseinheit für den Lesestrahl 24, 32 oder die noch zu beschreibende dynamische Anpassung der Scanfrequenz $f_{scan}$. Die Funktionalität der Lichtlaufzeitmesseinheit 50 kann mindestens teilweise in die Steuer- und Auswertungseinheit 20 integriert sein, auch wenn der Abstandssensor 18 vorzugsweise stattdessen autark bleibt und nur Abstände d übergibt.

Zum Codelesen wertet die Steuer- und Auswertungseinheit 20 den Hell-Dunkel-Wechsel des Intensitätsverlaufs in dem Empfangssignal des Lichtempfängers 14 aus. Einen dem optischen Code 34 entsprechenden Hell-Dunkel-Wechsel gibt es natürlich nur dann, wenn sich tatsächlich ein optischer Code 34 im Lesebereich 28 befindet. Für das Decodieren von optischen Codes 34 sind zahlreiche Verfahren an sich bekannt, die beispielsweise Mehrfachlesungen und unvollständige Abtastungen kombinieren und auf die an dieser Stelle nicht näher eingegangen wird.

Ebenso wenig werden alternative Ausgestaltungen des Grundaufbaus einer Codescanvorrichtung 10 zu der in Figur 1 gezeigten Ausführungsform erläutert, der nur beispielhaft zu verstehen ist. Insbesondere die Strahlführung des Lesestrahls 24, 32 kann in anderen Ausführungsformen ganz anders erfolgen, etwa durch einen biaxialen Aufbau von Lichtsender 12 und Lichtempfänger 14 oder andere Umlenkungen sowie eine andere Ausgestaltung, Anordnung und/oder Orientierung der Ablenkeinheit 16. Die Codescanvorrichtung 10 wird durch ein Gehäuse 52 geschützt, das im vorderen Bereich, wo Licht 24, 32, 40 hindurchtritt, durch eine Frontscheibe 54 abgeschlossen ist, die alternativ mehrteilig ausgebildet sein kann.

Figur 2 zeigt eine mögliche Anwendung der Codescanvorrichtung 10 in Montage an einem Förderband 56. Die Objekte 30 mit den optischen Codes 34 werden in der mit einem Pfeil angedeuteten Bewegungsrichtung 58 gefördert. Um auch Seitenflächen der Objekte 30 und insbesondere seitlich angebrachte optische Codes 34a zu erfassen, können zusätzliche, nicht dargestellte Codescanvorrichtungen 10 aus unterschiedlicher Perspektive eingesetzt werden.

Die Codescanvorrichtung 10 wird hier nur noch ganz grob mit ihrem Abstandssensor 18 und dessen Abstandsmess-Signal 40 und einer zusammenfassenden Codescannereinheit 60 gezeigt, die durch Aussenden des Lesestrahls 24 und Empfangen des zurücckehrenden Lesestrahls 32 den Lesebereich 28 erzeugt. Der Aufbau im Einzelnen wurde bereits anhand der Figur 1 erläutert. Der Abstandssensor 18 misst durch seine Anordnung und Ausrichtung einen jeweiligen Abstand d zu einer im Vergleich zu dem Lesebereich 28 gegen die Bewegungsrichtung 58 vorgelagerten Position. Das ist besonders vorteilhaft, aber nicht zwingend. Umgekehrt ist denkbar, den Abstandssensor 18 noch weiter vorgelagert anzuordnen, der dann vorzugsweise eine externe, an die übrige Codescanvorrichtung 10 direkt oder über eine Steuerung angeschlossene Vorrichtung ist.

Die Anwendung an einem Förderband 56 ist nur ein Beispiel. Die Codescanvorrichtung 10 kann alternativ für andere Anwendungen eingesetzt werden, etwa an einem festen Arbeitsplatz, an dem ein Arbeiter jeweils Objekte 30 mit optischen Codes 34 in den Lesebereich 28 hält. Hierfür kann dann der durch das Abstandsmess-Signal 40 vorgegebene Messbereich des Abstandssensors 18 mit dem Lesebereich 28 zusammenfallen oder näher daran heranrücken, und der Abstand d wird vorzugsweise nur zeitlich vorab bestimmt. Es ist denkbar, den Messbereich des Abstandssensors 18 durch Auswahl von Messzonen variabel zu gestalten und je nach Anwendung mit und ohne Relativbewegung von Objekten 30 anzupassen.

Figur 3 zeigt nochmals vergrößert eine bevorzugte stationäre Montage der Codescanvorrichtung 10 an einer Fördereinrichtung, die Objekte 30 mit optischen Codes 34 in einer Bewegungsrichtung 58 durch ihren Lesebereich 28 führt. Die Codescanvorrichtung 10 ist hier nur noch als Einheit gezeigt, der integrierte, aufgesetzte oder separat angeordnete Abstandssensor 18 nur durch sein Abstandsmess-Lichtsignal 40 repräsentiert. Die TOF-Sendeoptik 44 sorgt für ein elliptisches oder linienförmiges Ausgangsprofil, so dass der Messbereich des Abstandssensors 18 ebenso wie der Lesebereich 28 der Codescanvorrichtung 10 einen flachen Fächer mit großem Ausgangswinkel in einer Querrichtung und nur wenigen Grad orthogonal dazu bildet.

Durch eine gegen die Bewegungsrichtung 58 vorgeordnete Anordnung, Ausrichtung und/oder Anpassung von Messzonen des Abstandssensors 18 wird der Abstand d eines Objekts 30 oder optischen Codes 34 schon mit etwas zeitlichem Vorlauf gemessen. Der Abstandssensor 18 blickt sozusagen in die Zukunft, und so kann die Steuer- und Auswertungseinheit 20 rechtzeitig reagieren und den Codescanvorgang an den Abstand d anpassen. Wie schon erwähnt, ist ein solcher Vorlauf nicht zwingend notwendig, insbesondere in einer statischen Lesesituation etwa mit manueller Präsentation der Objekte 30 und optischen Codes 34 oder bei langsamer Förderbewegung beziehungsweise Stop-and-Go-Förderung.

Erfindungsgemäß wird der Abstand d verwendet, um die Scanfrequenz $f_{scan}$ der Ablenkeinheit 16 anzupassen. Dies erfolgt vorzugsweise in zusätzlicher Abhängigkeit von einer Modulgröße m der zu lesenden optischen Codes 34. Nun folgt eine beispielhafte Herleitung der jeweils passenden Scanfrequenz $f_{scan}$.

Figur 4 ist eine Skizze, die den Zusammenhang zwischen einer Modulgröße m, einem in einer Zeiteinheit abgescannten Bereich x, einer Ortsfrequenz $f_0$ der Hell-Dunkel-Übergänge im Empfangssignal und der Scanfrequenz $f_{scan}$ veranschaulicht. Die Modulgröße m entspricht der Ausdehnung der kleinsten Codeelemente, sozusagen der Balkendicke eines Strichcodes. Die Codescanvorrichtung 10 muss beim Abscannen einen Hell-Dunkel-Übergang der Breite 2*m im Empfangssignal erfassen können. Anders ausgedrückt ist die gerade noch zu erfassende kleinste Struktur ein Balken der Modulgröße m, gefolgt von einer gleich großen Lücke. Diese Breite 2m bildet eine Periode der Ortsfrequenz $f_0$. Im Empfangssignal entspricht diese Periode 2m somit der dazu invers proportionalen Ortsfrequenz $f_0$ der Hell-Dunkel-Übergänge, d.h. es gilt $f_0 \sim \frac{1}{2m}$ . Die gleiche invers proportionale Beziehung besteht auch zwischen dem jeweils in einer Zeiteinheit abgescannten Bereich x und der Scanfrequenz $f_{scan}$, d.h. es gilt $x \sim \frac{1}{f_{scan}}$ . Genaugenommen gilt das nur für größere Abstände, $d \gg x$, aber diese Voraussetzung ist gegeben.

Daraus lässt sich als ein erstes Zwischenergebnis zusammenfassend die Beziehung $\frac{2m}{x} = \frac{f_{scan}}{f_0}$ ableiten. Der Faktor zwei stammt hierbei aus der Forderung, genau die kleinste Modulbreite m noch gerade auflösen zu können und kann deshalb noch etwas variieren, was mit der Formel ohne eigene Erwähnung mit gemeint sein soll.

Darin ist noch unberücksichtigt, dass die Ablenkeinheit 16 bei einer vorteilhaften Auslegung als Polygonspiegelrad N Spiegelfacetten 38 aufweist und somit je Umdrehung den Lesebereich 28 mehrfach abscannt. Der pro Spiegelfacette 38 abgescannte Winkelbereich ist $\frac{2*360°}{N}$ . Der Faktor zwei rührt daher, dass ein auf die Spiegelfacette 38 einfallender Strahl nach der Regel Einfallswinkel gleich Ausfallswinkel reflektiert wird und sich somit der abgescannte Winkelbereich gegenüber dem von der Spiegelfacette 38 selbst eingenommenen Winkelbereich verdoppelt.

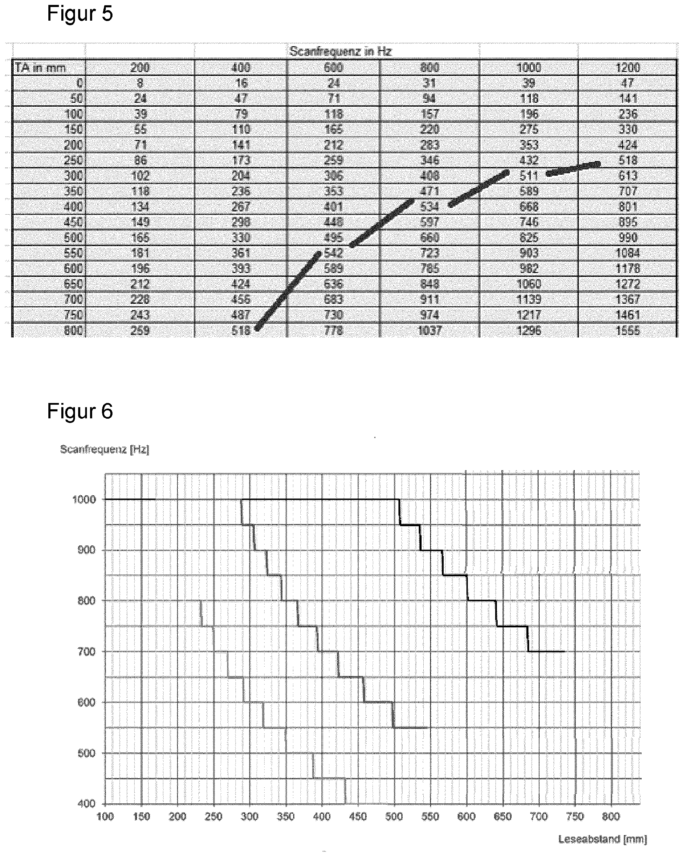

Eine ganz analoge Betrachtung nun nicht für den gesamten abgescannten Winkelbereich einer Spiegelfacetten 38, sondern den pro Zeiteinheit abgescannten Bereich x ergibt $x = \frac{4\pi r}{N}$ . Dabei ist r der Radius, in dem gescannt wird, somit letztlich der Abstand d, womit im Wesentlichen r=d gilt. Genaugenommen müsste man noch mit r=TA+IL differenzieren, wobei TA der eigentliche (Tast)abstand und IL ein interner Lichtweg ist. Der Tastabstand TA taucht daher später in Figur 5 noch einmal als Größe auf, hier sollen aber ab nun vereinfachend r und d gleichgesetzt bleiben und ein interner Lichtweg IL vernachlässigt werden. Das ist praktisch auf jeden Fall durch entsprechende Kalibrationen und Offsets erreichbar, sollte der interne Lichtweg IL doch einen spürbaren Einfluss haben.

Die obige Gleichung $\frac{2m}{x} = \frac{f_{scan}}{f_0}$ kann nun nach $f_0$ aufgelöst und darin $x = \frac{4\pi r}{N}$ mit r=d eingesetzt werden: $f_0 = \frac{f_{scan} \, x}{2m} = \frac{2\pi d}{Nm} f_{scan}$ .

Figur 5 zeigt beispielhaft eine Tabelle mit nach dieser Formel berechneten Ortsfrequenzen $f_0$ für ein beispielhaft gewähltes m von 0,5 mm bei N=8 Spiegelfacetten 38, wobei die einzelnen Werte in der Einheit kHz eingetragen sind. In den Spalten dieser Tabelle sind verschiedene Scanfrequenzen $f_{scan}$ in der Einheit Hz und in den Zeilen verschiedene Tastabstände TA in der Einheit mm eingetragen, wobei die Beziehung zwischen dem Tastabstand TA und dem von dem Abstandssensor 18 gemessenen Abstand d bereits diskutiert wurde und dies nur etwas vereinfachend gleichgesetzt werden kann. Es versteht sich, dass dies nur die Formel veranschaulicht und beliebige Zwischenwerte sowie ähnliche Tabellen für anderes m und N erzeugt werden könnten.

Nun gibt es umgekehrt für jede bestimmte Auslegung und Konfiguration einer Codescanvorrichtung 10 eine bestimmte Ortsfrequenz $f_0$, die ein optimales Codelesen ermöglicht. Das hängt unter anderem von den verwendeten analogen Filtern, aber auch von anderen für die gewählte Codescanvorrichtung 10 spezifischen Eigenschaften ab, von denen noch die verwendeten Codelesealgorithmen beispielhaft genannt seien. Die Abhängigkeit von den analogen Filtern lässt sich wie folgt verstehen: Der Lichtempfänger 14 hat eine begrenzte Bandbreite, und die nachgelagerten Signalverstärkungselemente und Signalvorverarbeitungselemente sind an diese Bandbreite angepasst. Das kann ein Tiefpassverhalten einschließen, oder es werden Bandpassfilter oder noch andere Filter eingesetzt. Die Beschränkung des Frequenzbandes reduziert vor allem das Rauschen, denn mit hohem Rauschanteil verschlechtert sich die Qualität der Codelesung. Eine zu gering gewählte Ortsfrequenz $f_0$ würde zu einem unnötig hohen Rauschanteil führen. Außerdem ist eine hohe Scanfrequenz $f_{scan}$ sinnvoll, die ja zu der Ortsfrequenz proportional ist, um einen Code 34 möglichst viele Male innerhalb einer gegebenen Zeit abtasten zu können, in der sich der Code 34 beispielsweise während einer Relativbewegung im Lesebereich 28 befindet. Umgekehrt würde eine zu groß gewählte Ortsfrequenz $f_0$ oberhalb der Empfängergrenzfrequenz eine schlechte Signalqualität insbesondere mit geringer Amplitude und Verzerrungen liefern. Es ist daher sinnvoll, die gewünschte Ortsfrequenz $f_0$ im oberen Bereich der Empfängerbandbreite festzulegen, wo die Kombination von Signalqualität, Rauschen und möglichst hohe Scanfrequenz optimal ist.

Nimmt man beispielhaft an, dass die für eine Codescanvorrichtung 10 besonders geeignete Ortsfrequenz $f_0$ bei 500 kHz liegt, so lassen sich in den Zeilen und Spalten der Tabelle in Figur 5 die geeigneten Wertepaare für (m,d) auffinden. In Figur 5 ist dies durch schwarze Linien hervorgehoben, die in etwa, aber nicht ganz auf einer Diagonalen liegen.

Diese Wertepaare (m,d) sind nun Stützpunkte der gesuchten Beziehung fscan(m,d), mit denen in Abhängigkeit von Modulgröße m und Abstand d die jeweils optimale Scanfrequenz fscan bestimmt werden kann. Durch Verfeinerung der Tabelle, Interpolation, Funktionsfit und dergleichen Maßnahmen kann die Beziehung $f_{scan}(m,d)$ in jeder gewünschten Genauigkeit abgeleitet werden.

Figur 6 zeigt einige Beispiele für $f_{scan}(m,d)$. Für jedes feste m kann die Beziehung als eine Kennlinie verstanden werden, für mehrere m ergibt sich ein Kennlinienfeld wie dargestellt. Hier wurden beispielhaft die Werte m=1 mm, m=0,5 mm wie in Figur 5 und m=0,35 mm gewählt. Der Stufenverlauf entspricht der relativ groben Abstufung in der Tabelle gemäß Figur 5. Die Stufen können verfeinert, und durch Interpolation oder Funktionsfit kann auch ein zumindest quasi-kontinuierlicher Verlauf erreicht werden.

Somit wird eine Codescanvorrichtung 10 vorteilhafterweise für eine Modulgröße m der zu lesenden Codes 34 konfiguriert. Alternativ stellt sie sich selber auf eine Modulgröße m ein, etwa auf diejenige, die während einer vergangenen Betriebsphase besonders häufig auftrat. Die Steuer- und Auswertungseinheit 20 selektiert eine Kennlinie $f_{scan}(m,d)$ mit dieser Modulgröße m. Falls für das gewählte m keine Kennlinie verfügbar ist, wird eine Kennlinie mit ähnlichen m gewählt, oder es wird aus hinsichtlich m benachbarten Kennlinien interpoliert.

Für die in den Lesebereich 28 tretenden Objekte 30 und optischen Codes 34 bestimmt dann jeweils der Abstandssensor 18 den Abstand d. Die Steuer- und Auswertungseinheit 20 liest die entsprechende Scanfrequenz $f_{scan}(m,d)$ aus der Kennlinie und stellt die Drehgeschwindigkeit des Antriebs der Ablenkeinheit 16 entsprechend ein, insbesondere indem dessen Motorspannung auf einen entsprechenden Sollwert geregelt wird.

Bisher wurde vorausgesetzt, dass die Modulgröße m vorgegeben oder gegebenenfalls noch aus einer Historie bestimmt wird. Es ist auch denkbar, die Modulgröße m zu messen. Dabei werden, grob gesprochen, die tatsächlichen Lauflängen der Codebalken und Codelücken sowie die Gesamtausdehnung des Codes im Scanbereich ermittelt. Nach dem Lesen des Codes ist bekannt, welche Codebalken und Codelücken die Modulbreite m aufweisen. Anhand eines von dem Abstandssensor 18 gemessenen Höhenprofils lässt sich unter Berücksichtigung der Perspektive zurückrechnen, wie groß diese Codebalken und Codelücken tatsächlich waren, und damit ist die Modulbreite m bestimmt.

Ein beispielhaftes konkretes Verfahren könnte dafür wie folgt vorgehen: Der Abstandssensor 18 ermittelt das Höhenprofil, das sich mit einem der Anordnung und Relativbewegung entsprechenden Zeitversatz $\Delta t$ in dem Lesebereich 18 befinden wird. Die Codescanvorrichtung 10 liest den Code 34 und ermittelt die Position des Codes 34 im Lesebereich 18 sowie die Lauflängen der Codebalken und Codelücken. Nachdem der Code 34 gelesen wurde, ist retrospektiv bekannt, welche Codebalken und Codelücken die minimale Modulbreite m aufweisen sowie die Gesamtmodullänge des Codes mit all seinen Codebalken und Codelücken. Aus dem internen Lauflängenzähler lässt sich die Zeit $t_m$ bestimmen, in der eine Modulbreite m überstrichen wird, oder eine Zeit $t_{2m}$ für zwei Modulbreiten beziehungsweise eine Zeit $t_{Code}$ für den gesamten Code. Insbesondere gilt hier

$$f_0 = \frac{1}{t_{2m}}$$

. Mit einer perspektivischen Umrechnung von der Position des Codes 34 auf das um $\Delta t$ versetzt erfasste Höhenprofil ergibt sich der Abstand d zum Code 34. In Kenntnis von d und $f_0$ ist durch Umstellen der Formel

$$f_0 = \frac{2\pi d}{Nm} f_{scan}$$ die Modulbreite m berechenbar, denn die Formel enthält ansonsten nur bekannte Konstanten beziehungsweise die bekannte Anzahl N der Spiegelfacetten.

Damit ist die Modulgröße m bekannt, und, wie unter Bezugnahme auf die Figuren 5 und 6 erläutert, kann nun die passende Kennlinie herangezogen werden, um die Scanfrequenz $f_{scan}$ anzupassen. Insbesondere würde mit diesem Vorgehen erkannt, wenn sich die Modulgröße m verkleinert, und zum Ausgleich könnte die Scanfrequenz $f_{scan}$ etwas heruntergenommen werden. Das Vorgehen ist nicht grenzenlos möglich. Ist beispielsweise eine völlig unpassende Scanfrequenz $f_{scan}$ eingestellt, mit der ein Code überhaupt nicht lesbar ist, dann lässt sich so auch keine Modulbreite m bestimmen, die wiederum Voraussetzung ist, die passende Scanfrequenz $f_{scan}$ zu finden. Wenn aber anfangs sinnvoll parametriert wurde, können doch Driften und maßvolle Änderungen der Modulgröße m berücksichtigt werden. Vorsicht ist auch bei schrägen Objekten 30 geboten, denn eine geneigte Dachfläche täuscht der Codelesevorrichtung 10 eine kleinere Modulbreite m vor. Allerdings könnte der Abstandssensor 18 das über ein Höhenprofil erkennen, so dass dieser Fall angemessen berücksichtigt wird. Außerdem ist aus Sicht der Codelesevorrichtung 10 die Modulgröße m tatsächlich verändert, und insofern verursacht die Schräge gar keine Fehlanpassung. Es sollte aber beachtet werden, wenn Interesse an der tatsächlichen Modulgröße m besteht, beispielsweise für einen Anlagenbetreiber.

Eine durch die Codescanvorrichtung 10 bestimmte Modulgröße m kann für sich eine für den Anlagenbetreiber relevante Größe sein, insbesondere in Form einer Statistik der vorkommenden Modulgrößen m. Typischerweise ist eine Lesevorrichtung für eine bestimmte minimale Modulgröße konzipiert, beispielsweise m=0,2 mm. Wenn nun diese minimale Modulgröße unterschritten wird, insbesondere schleichend von 0,2 mm auf 0,19 mm, 0,18 mm etc., so ist eine entsprechende Warnung hilfreich. Dann kann auf das Unterschreiten der minimalen Modulgröße reagiert werden, etwa durch eine Information an die Codeerzeugung, etwa den Drucker, um so einem Ausfall oder einer Degradierung der Leserate zuvorzukommen. Eine entsprechende Einricht- oder Wartungshilfe der Codescanvorrichtung 10 kann die Daten aufbereiten und darstellen, so dass eine noch umfassendere Diagnose möglich und insbesondere frühzeitig erkannt wird, ob das Gerät an der Grenze oder nur leicht über der Grenze seiner Spezifikation betrieben wird.

**Patentansprüche**

1. Codescanvorrichtung (10) zum Erfassen eines optischen Codes (34) auf einem Objekt (30) in einem Lesebereich (28), insbesondere eines Barcodes, die einen Lichtsender (12) zum Aussenden eines Lesestrahls (24), eine Ablenkeinheit (16) zum periodischen Ablenken des Lesestrahls (24) über den Lesebereich (28) mit einer Scanfrequenz $f_{scan}$, einen Lichtempfänger (14) zum Erzeugen eines Empfangssignals aus dem zurückkehrenden Lesestrahl (32), einen Abstandssensor (18) zur Erfassung eines Abstands d zu dem Objekt (30) sowie eine Steuer- und Auswertungseinheit (20) aufweist, die dafür ausgebildet ist, anhand des Empfangssignals einen Codeinhalt des optischen Codes (34) auszulesen und die Scanfrequenz $f_{scan}$ in Abhängigkeit von dem Abstand d einzustellen,
**dadurch gekennzeichnet,**
**dass** in der Steuer- und Auswertungseinheit (20) eine Kennlinie für den Zusammenhang der einzustellenden Scanfrequenz $f_{scan}$ in Abhängigkeit von dem Abstand d gespeichert ist .

2. Codescanvorrichtung (10) nach Anspruch 1, wobei die Steuer- und Auswertungseinheit (20) dafür ausgebildet ist, die Scanfrequenz $f_{scan}$ in Abhängigkeit einer Modulgröße m des optischen Codes (34) einzustellen.

3. Codescanvorrichtung (10) nach Anspruch 2, wobei in der Steuer- und Auswertungseinheit (20) mindestens eine Kennlinie für den Zusammenhang der einzustellenden Scanfrequenz $f_{scan}$ in Abhängigkeit von dem Abstand d und der Modulgröße m gespeichert ist.

4. Codescanvorrichtung (10) nach einem der vorhergehenden Ansprüche, wobei die Kennlinie aus einer Ortsfrequenz $f_0$ der Hell-Dunkel-Übergänge im Empfangssignal in Abhängigkeit von dem Abstand d und der Scanfrequenz $f_{scan}$ bestimmt ist, anhand derer Paare von Scanfrequenz $f_{scan}$ und Abstand d identifiziert sind, in denen eine gewünschte Ortsfrequenz erreicht ist.

5. Codescanvorrichtung (10) nach Anspruch 4, wobei die Abhängigkeit der Ortsfrequenz $f_0$ von dem Abstand d und der Scanfrequenz $f_{scan}$ anhand der Formel $f_0 = \frac{2\pi d}{Nm} f_{scan}$ bestimmt ist, wobei N die Anzahl Spiegelflächen (38) der Ablenkeinheit (16) ist.

6. Codescanvorrichtung (10) nach Anspruch 4 oder 5, wobei die gewünschte Ortsfrequenz anhand der Auslegung der Codescanvorrichtung (10) und/oder der Signalauswertung vorgegeben ist, insbesondere anhand mindestens eines Filters und/oder Decodierverfahrens.

**7.** Codescanvorrichtung (10) nach einem der vorhergehenden Ansprüche,
wobei die Ablenkeinheit (16) ein Polygonspiegelrad mit N Spiegelflächen (38) aufweist.

**8.** Codescanvorrichtung (10) nach einem der vorhergehenden Ansprüche,
die für das Lesen von optischen Codes (34) einer bestimmten Modulgröße m ausgebildet ist.

**9.** Codescanvorrichtung (10) nach einem der vorhergehenden Ansprüche,
wobei der Abstandssensor (18) in die Codescanvorrichtung (10) integriert ist.

**10.** Codescanvorrichtung (10) nach einem der vorhergehenden Ansprüche,
wobei der Abstandssensor (18) ein optoelektronischer Abstandssensor insbesondere nach dem Prinzip des Lichtlaufzeitverfahrens ist.

**11.** Codescanvorrichtung (10) nach einem der vorhergehenden Ansprüche,
die stationär an einer Fördereinrichtung (56) montiert ist, welche Objekte (30) in einer Bewegungsrichtung (58) fördert.

**12.** Codescanvorrichtung (10) nach Anspruch 11,
wobei der Abstandssensor (18) derart angeordnet und/oder ausgerichtet ist, dass der Abstand d bereits vor dem Abtasten des optischen Codes (34) mit dem Lesestrahl (24) bekannt ist.

**13.** Verfahren zum Erfassen eines optischen Codes (34) auf einem Objekt (30) in einem Lesebereich (28), insbesondere eines Barcodes, bei dem ein Lesestrahl (24) ausgesandt, mit einer Scanfrequenz $f_{scan}$ periodisch über den Lesebereich (28) geführt, aus dem zurückkehrenden Lesestrahl (32) ein Empfangssignal erzeugt, ein Abstand d zu dem Objekt (34) erfasst und das Empfangssignal ausgewertet wird, um anhand des Empfangssignals einen Codeinhalt des optischen Codes (34) auszulesen, wobei die Scanfrequenz $f_{scan}$ in Abhängigkeit von dem Abstand d eingestellt wird,
**dadurch gekennzeichnet,**
**dass** eine Kennlinie für den Zusammenhang der einzustellenden Scanfrequenz $f_{scan}$ in Abhängigkeit von dem Abstand d gespeichert ist.

**Claims**

**1.** A code scanning device (10) for detecting an optical code (34) on an object (30) in a reading area (28), in particular a barcode, comprising a light transmitter (12) for transmitting a reading beam (24), a deflection unit (16) for periodically deflecting the reading beam (24) over the reading area (28) at a scanning frequency $f_{scan}$, a light receiver (14) for generating a reception signal from the returning reading beam (32), a distance sensor (18) for detecting a distance d from the object (30), and a control and evaluation unit (20) configured to read out a code content of the optical code (34) on the basis of the received signal and to set the scanning frequency $f_{scan}$ as a function of the distance d, **characterized in that** a characteristic curve for the relationship between the scanning frequency $f_{scan}$ to be set and the distance d is stored in the control and evaluation unit (20).

**2.** The code scanning device (10) according to claim 1, wherein the control and evaluation unit (20) is configured to adjust the scanning frequency $f_{scan}$ in dependence on a module size m of the optical code (34).

**3.** The code scanning device (10) according to claim 2, wherein at least one characteristic curve for the relationship between the scanning frequency $f_{scan}$ to be set and the distance d and the module size m is stored in the control and evaluation unit (20).

**4.** The code scanning device (10) according to any of the preceding claims, wherein the characteristic curve is determined from a spatial frequency $f_0$ of the light-dark transitions in the received signal as a function of the distance d and the scanning frequency $f_{scan}$, by means of which pairs of scanning frequency $f_{scan}$ and distance d are identified where a desired spatial frequency is reached.

**5.** The code scanning device (10) according to claim 4, wherein the dependence of the spatial frequency $f_0$ on the distance d and the scanning frequency $f_{scan}$ is determined by the formula $f_0 = \frac{2\pi d}{Nm} f_{scan}$, where N is the number of mirror surfaces (38) of the deflection unit (16).

**6.** The code scanning device (10) according to claim 4 or 5,
wherein the desired spatial frequency is predetermined on the basis of the design of the code scanning device (10) and/or the signal evaluation, in particular on the basis of at least one filter and/or decoding method.

**7.** The code scanning device (10) according to any of the preceding claims, wherein the deflection unit (16) comprises a polygon mirror wheel having N mirror faces (38).

**8.** The code scanning device (10) according to any of the preceding claims, which is configured for reading optical codes (34) of a specific module size m.

9. The code scanning device (10) according to any of the preceding claims, wherein the distance sensor (18) is integrated into the code scanning device (10).

10. The code scanning device (10) according to any of the preceding claims, wherein the distance sensor (18) is an optoelectronic distance sensor, in particular according to the principle of the time-of-flight method.

11. The code scanning device (10) according to any of the preceding claims, which is stationarily mounted on a conveyor (56) which conveys objects (30) in a direction of movement (58).

12. The code scanning device (10) according to claim 11,
wherein the distance sensor (18) is arranged and/or aligned in such a way that the distance d is already known before the optical code (34) is scanned with the reading beam (24).

13. A method for detecting an optical code (34) on an object (30) in a reading area (28), in particular a barcode, wherein a reading beam (24) is transmitted and periodically guided over the reading area (28) at a scanning frequency $f_{scan}$, a received signal is generated from the returning reading beam (32), a distance d to the object (34) is detected and the received signal is evaluated, in order to read out a code content of the optical code (34) on the basis of the received signal, the scanning frequency $f_{scan}$ being set as a function of the distance d, **characterized in that** a characteristic curve for the relationship between the scanning frequency $f_{scan}$ to be set and the distance d is stored.

**Revendications**

1. Dispositif de balayage de code (10) pour la détection d'un code optique (34) sur un objet (30) dans une zone de lecture (28), en particulier un code-barres, comprenant un émetteur de lumière (12) pour l'émission d'un rayon de lecture (24), une unité de déviation (16) pour la déviation périodique du rayon de lecture (24) sur la zone de lecture (28) à une fréquence de balayage $f_{scan}$, un récepteur de lumière (14) pour générer un signal de réception à partir du faisceau de lecture (32) renvoyé, un capteur de distance (18) pour détecter une distance d de l'objet (30), ainsi qu'une unité de commande et d'évaluation (20) configurée pour lire un contenu de code du code optique (34) sur la base du signal reçu et pour régler la fréquence de balayage $f_{scan}$ en fonction de la distance d,

**caractérisé en ce qu'**une courbe caractéristique de la relation entre la fréquence de balayage $f_{scan}$ à régler et la distance d est mémorisée dans l'unité de commande et d'évaluation (20).

2. Dispositif de balayage de code (10) selon la revendication 1,
dans lequel l'unité de commande et d'évaluation (20) est configurée pour régler la fréquence de balayage $f_{scan}$ en fonction d'une grosseur de module m du code optique (34).

3. Dispositif de lecture de code (10) selon la revendication 2,
dans lequel au moins une courbe caractéristique pour la relation entre la fréquence de balayage $f_{scan}$ à régler et la distance d et la grosseur de module m est stockée dans l'unité de commande et d'évaluation (20).

4. Dispositif de balayage de code (10) selon l'une des revendications précédentes, dans lequel la courbe caractéristique est déterminée à partir d'une fréquence spatiale $f_0$ des transitions clair-obscur dans le signal reçu en fonction de la distance d et de la fréquence de balayage $f_{scan}$, au moyen de laquelle des paires de fréquence de balayage $f_{scan}$ et de distance d sont identifiées où une fréquence spatiale souhaitée est atteinte.

5. Dispositif de balayage de code (10) selon la revendication 4,
dans lequel la dépendance de la fréquence spatiale $f_0$ par rapport à la distance d et à la fréquence de balayage $f_{scan}$ est déterminée par la formule $f_0 = \frac{2\pi d}{Nm} f_{scan}$ , où N est le nombre de surfaces de miroir (38) de l'unité de déviation (16).

6. Dispositif de balayage de code (10) selon la revendication 4 ou 5,
dans lequel la fréquence spatiale souhaitée est prédéterminée sur la base de la conception du dispositif de balayage de code (10) et/ou de l'évaluation du signal, en particulier sur la base d'au moins un filtre et/ou d'un procédé de décodage.

7. Dispositif de lecture de code (10) selon l'une des revendications précédentes, dans lequel l'unité de déviation (16) comprend une roue à miroir polygonale ayant N faces de miroir (38).

8. Dispositif de lecture de code (10) selon l'une des revendications précédentes, qui est configuré pour la lecture des codes optiques (34) d'une taille de module m spécifique.

**9.** Dispositif de lecture de code (10) selon l'une des revendications précédentes, dans lequel le capteur de distance (18) est intégré dans le dispositif de balayage de code (10).

**10.** Dispositif de lecture de code (10) selon l'une des revendications précédentes, dans lequel le capteur de distance (18) est un capteur de distance optoélectronique, notamment selon le principe de la méthode du temps de vol.

**11.** Dispositif de lecture de code (10) selon l'une des revendications précédentes, qui est monté de façon fixe sur un convoyeur (56) qui transporte des objets (30) dans une direction de déplacement (58).

**12.** Dispositif de lecture de code (10) selon la revendication 11,
dans lequel le capteur de distance (18) est disposé et/ou aligné de telle sorte que la distance d est déjà connue avant que le code optique (34) soit balayé par le faisceau de lecture (24).

**13.** Procédé pour détecter un code optique (34) sur un objet (30) dans une zone de lecture (28), en particulier un code-barres, dans lequel un faisceau de lecture (24) est émis et guidé périodiquement sur la zone de lecture (28) à une fréquence de balayage $f_{scan}$, un signal de réception est généré à partir du faisceau de lecture (32) renvoyé, une distance d par rapport à l'objet (34) est détectée et le signal de réception est évalué, afin de lire un contenu de code du code optique (34) sur la base du signal de réception, la fréquence de balayage $f_{scan}$ étant réglée en fonction de la distance d,
**caractérisé en ce qu'**une courbe caractéristique de la relation entre la fréquence de balayage $f_{scan}$ à régler et la distance d est mémorisée.

Figur 1

Figur 2

Figur 3

Figur 4

$$\frac{2m}{x} = \frac{f_{scan}}{f_0}$$

# Figur 5

| TA in mm | Scanfrequenz in Hz | | | | | |
|---|---|---|---|---|---|---|
| | 200 | 400 | 600 | 800 | 1000 | 1200 |
| 0 | 8 | 16 | 24 | 31 | 39 | 47 |
| 50 | 24 | 47 | 71 | 94 | 118 | 141 |
| 100 | 39 | 79 | 118 | 157 | 196 | 236 |
| 150 | 55 | 110 | 165 | 220 | 275 | 330 |
| 200 | 71 | 141 | 212 | 283 | 353 | 424 |
| 250 | 86 | 173 | 259 | 346 | 432 | 518 |
| 300 | 102 | 204 | 306 | 408 | 511 | 613 |
| 350 | 118 | 236 | 353 | 471 | 589 | 707 |
| 400 | 134 | 267 | 401 | 534 | 668 | 801 |
| 450 | 149 | 298 | 448 | 597 | 746 | 895 |
| 500 | 165 | 330 | 495 | 660 | 825 | 990 |
| 550 | 181 | 361 | 542 | 723 | 903 | 1084 |
| 600 | 196 | 393 | 589 | 785 | 982 | 1178 |
| 650 | 212 | 424 | 636 | 848 | 1060 | 1272 |
| 700 | 228 | 456 | 683 | 911 | 1139 | 1367 |
| 750 | 243 | 487 | 730 | 974 | 1217 | 1461 |
| 800 | 259 | 518 | 778 | 1037 | 1296 | 1555 |

# Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2026249 B1
- DE 102018105301 A1
- US 5504316 A

- US 5371361 A
- US 5115121 A
- WO 9013875 A1